# EUROPÄISCHE PATENTSCHRIFT

(11) **EP 2 040 530 B1**
(45) Veröffentlichungstag und Bekanntmachung des Hinweises auf die Patenterteilung: **22.08.2012**
(21) Anmeldenummer: 07785837.1
(22) Anmeldetag: 22.06.2007
(51) Int. Cl.: A01B 35/28, A01G 23/06, A01F 12/40, B02C 18/18, A01F 29/09

(54) **SCHNEIDKÖRPER**
CUTTING ELEMENT
CORPS DE COUPE

(30) Priorität: 11.07.2006 DE 102006032295
(43) Veröffentlichungstag der Anmeldung: 01.04.2009
(73) Patentinhaber: AHWI Maschinenbau Gmbh, 88634 Herdwangen (DE)
(72) Erfinder: WILLIBALD, Artur, 88634 Herdwangen (DE)
(74) Vertreter: Daub, Thomas
(86) Internationale Anmeldenummer: PCT/EP2007/005521
(87) Internationale Veröffentlichungsnummer: WO 2008/006457

(56) Entgegenhaltungen:
- EP-A- 1 232 683
- WO-A-2006/079207
- DE-U1- 9 312 059
- DE-U1- 9 402 062
- US-A- 1 661 692
- US-A1- 2002 169 011
- US-A1- 2007 095 431
- US-B1- 6 176 445

## Beschreibung

Die Erfindung betrifft einen Schneidkörper zum Zerkleinern von organischen Stoffen, organischen Materialien, Böden, pflanzlichen Kulturen od; dgl., insbesondere zum Mulchen, Schreddern und Hacken, welcher mit einem Zerkleinerungsrotor fest oder wiederlösbar verbindbar ist, wobei der Schneidkörper gegenüber einem Basisteil mittels einem Befestigungsmittel verbindbar ist, wobei das mit dem Rotor fest verbundene Basisteil eine entsprechende Flanke aufweist, die mit zumindest einer der Schneide abgewandten Rückseite/n des Schneidkörper zur Kraftübertragung in Eingriff steht, und der Schneidkörper einen Schneidenhalter bildet, von dessen Rumpfteil zwei parallel verlaufende Schenkel mit Bohrungen für Verschraubungen, Bolzen etc. abragen und zwischen den beiden Schenkeln eine weitere Rückseite gebildet ist.

Derartige Schneidkörper werden häufig auf walzenförmig Rotoren zur Bildung von Schneidkörperoberflächen zur Bearbeitung von organischen Materialien, zur Bearbeitung von Böden, zum Mulchen, zum Schreddern etc. aufgesetzt.

Herkömmliche Schneidkörper unterliegen einem grossen Verschleiss, beispielsweise bei der Bearbeitung von Böden oder organischen Kulturen. Sie sind zu teuer in der Herstellung und neigen zum Abbrechen oder Verformen von ihren Aufnahmen bzw. Basisteilen, was unerwünscht ist. Nach längerem Einsatz, je nach Untergrund müssen die Schneidkörper vom Rotor abgebaut und durch neue ausgetauscht werden.

Eine Vorrichtung dieser Art ist als Schlegel aus der DE 94 02 062 U1 für Geräte zur Aufbereitung organischer Abfallmaterialien wie z. B. Ast- und Strauchwerk, Schwachholz, Friedhofsabfälle etc., beispielsweise zum Zwecke der Kompostierung, bekannt, wobei der Schlegel aus einem mit einer rotierenden Arbeitswelle verbundenen Halter sowie einem mit letzterem über eine Schraub- sowie Klemmverbindung form- und kraftschlüssig verbundenen Schneidenteil besteht.

Daneben ist aus der US 6,176,445 B1 ein Schneidezahn bekannt, welcher an der Aussenfläche eines rotierenden Schneiders gehalten wird und geeignet ist für das Abholzen, Mulchen und Vermahlen von Bäumen. Der Schneidezahn besteht aus einem eine Vorderseite aufweisenden Schneidkörper mit Schneidspitzen, Seiten und Rückteil. Der Schneidkörper ist derart relativ zum rotierenden Schneider angebracht, dass zwei der drei Schneidspitzen in einer reduzierten Trageposition bleiben, während sich eine Dritte der drei Schneidspitzen in einer Schneideposition befindet, um Bäume zu schneiden.

Aus der DE 93 12 059 U1 ist ein walzenförmiger Schneidkörper bekannt, welcher auf der Scheidkörperoberfläche abstehend aufgebrachte Basisteile aufweist, wobei mit jedem Basisteil ein, mindestens eine Schneidplatte tragender Schneidenhalter verbindbar ist, wobei der Schneidenhalter mit dem Basisteil mittels einer Drehlagerung verbindbar ist, wobei die Achse der Drehlagerung parallel oder im Winkel zur Rotationsachse des Schneidkörpers ausgerichtet ist und die Verdrehung zwischen dem Schneidenhalter und dem Basisteil mittels eines Anschlages des Schneidenhalters oder des Basisteils entgegen der Drehrichtung des Schneidkörpers begrenzt ist.

Der vorliegenden Erfindung liegt daher die Aufgabe zugrunde, einen Schneidkörper der eingangs genannten Gattung zu schaffen, bei welchem die Standzeit im Betrieb wesentlich erhöht und ein Verschleiss minimiert ist und die Herstellungskosten bei Reduktion des Gesamtgewichtes minimiert werden sollen. Zudem soll eine Krafteinleitung und Kraftübertragung auf sein Halteteil bzw. den Rotor optimiert werden. Ausserdem soll der Schneidkörper sicher und stabil mit dem Rotor verbindbar sein.

Zur Lösung dieser Aufgabe führen die Merkmale des kennzeichnenden Teile des Patentanspruchs 1.

Bei der vorliegenden Erfindung hat sich insbesondere eine spezielle Ausbildung der Geometrie und Form des Schneidenhalters, insbesondere dessen Rumpfteil mit anschliessendem Verstärkungsprofil und vom Rumpfteil abragenden Schenkeln zum Übergreifen eines Basisteils zur Aufnahme, als vorteilhaft erwiesen.

Damit eine Kraftübertragung der an der Schneide entstehenden Kräfte auf das Basisteil, welches der Aufnahme des eigentlichen Schneidkörpers dient, optimiert ist, bildet das Rumpfteil des Schneidenhalters ein Verstärkungsprofil unterhalb der Schneide aus.

Dieses Verstärkungsprofil stärkt gleichzeitig den Bereich unterhalb der Schneide, in welchem ein Grossteil der Schneidkräfte aufgenommen werden müssen und bildet gleichzeitig die Aufnahme, sowie Auflagerung zur Kraftübertragung über seine Rückseite zum Basisteil.

Zur verbesserten Seitenstabilisierung sind innerhalb der Rückseite des Verstärkungsvorsprunges entsprechende Profilierungen, V-artige Nuten, halbkreisartige ovale Nuten vorgesehen, in welchen passgenau entsprechende Stirnflächen der Flanken des Basisteils eingreifen. Auf diese Weise wird zusätzlich eine Seitenstabilisierung des Schneidkörpers sowie auch ein Schwingungsverhalten gegenüber dem Basisteil und Rotor deutlich reduziert.

Ferner ist von Vorteil bei der vorliegenden Erfindung, dass nicht nur über die Rückseite des Verstärkungsprofils sondern auch über eine weitere Rückseite des eigentlichen Rumpfteils, die sich zwischen den beiden Schenkeln befindet, eine Kraftübertragung auf eine entsprechende Flanke des Basisteils erfolgt.

Auch hier kann die Rückseite des Rumpfteils aber auch die Rückseite des Verstärkungsprofils entsprechende Profilierungen als Negativ- oder Positivform aufweisen, um eine zusätzliche Seitenstabilisierung des Schneidkörpers, festgelegt am Basisteil, zu gewährleisten.

Die Rückseite des Verstärkungsprofils sowie die Rückseite des Rumpfteils zwischen den beiden Schenkeln schliessen vorzugsweise einen sehr stumpfen Winkel β ein, so dass gewährleistet wird, dass der Schneidkörper aufgesetzt auf das plattenartige Basisteil, festgelegt mit einem Bolzen, Verschraubung od. dgl. im Bereich der Schenkel weder nach oben noch nach unten sich bewegen kann. Auf diese Weise ist, bedingt durch die geometrische Form der Rückseiten des Rumpfteils sowie des Verstärkungsvorsprungs eine zusätzliche mechanische Verdrehsicherung gegen Verschwenken um einen Bolzen oder Verschraubung gewährleistet. Dies soll ebenfalls im Rahmen der vorliegenden Erfindung liegen.

Zudem hat sich als vorteilhaft erwiesen, dass oberhalb der Schneide im Rumpfteil entsprechende spanabweisende Flächen vorgesehen sein können. Diese können auch in einer Vorderseite der des Verstärkungsvorsprungs unterhalb der Schneide vorgesehen sein.

Ferner ist von Vorteil bei der vorliegenden Erfindung, dass die Seitenflächen des Verstärkungsvorsprungs, ausgehend von der Vorderseite und Schneide sich zur Rückseite hin in einem spitzen Winkel Y verjüngen. Auch hier wird über die geometrische Form des Verstärkungsvorsprungs die Schneide selbst freigehalten, so dass insgesamt im Betrieb und während des Einsatzes eine Reibung reduziert ist, wobei somit eine Erwärmung und Temperierung des Schneidkörpers im Einsatz verringert wird.

Zur zusätzlichen Gewichtsreduktion und Gewährleistung einer hohen Stabilität sind die seitlichen Schenkel an ihrer äusseren Oberseite mit entsprechenden Verstärkungsprofilen versehen, die sich kreisringartig um den Bereich der Bohrung erstrecken und sternartig nach aussen abragen, wobei eines der Verstärkungsprofile sich in den Bereich des Rumpfteils erstreckt, um zusätzliche Stabilität zu gewährleisten. Dabei können die Schenkel selbst konisch verjüngt, ausgehend vom Rumpfteil zur Bohrung ausgebildet sein, um einen gewichtsreduzierenden Schneidkörper unter Beibehaltung hoher Aufnahmekräfte und Stabilität zu schaffen.

Auf diese Weise ist ein Schneidkörper geschaffen, der eine wesentlich höhere Aufnahme von Kräften und Stössen zulässt, eine bessere Lagerung des Schneidkörpers auch gegen seitlich wirkende Kräfte bei geringen Fertigungskosten und optimierter Spanabführung bzw. Abführung von organischem Material gewährleistet.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte perspektivische Draufsicht auf den Schneidkörper;
Figur 2 eine schematisch dargestellte Seitenansicht auf den Schneidkörper gemäss Figur 1;
Figur 3 eine schematisch dargestellte perspektivische Unteransicht auf den Schneidkörper gemäss Figur 1;
Figur 4 eine schematisch dargestellte perspektivische Seitenansicht auf den Schneidkörper gemäss Figur 1 aufgesetzt auf ein Basisteil.

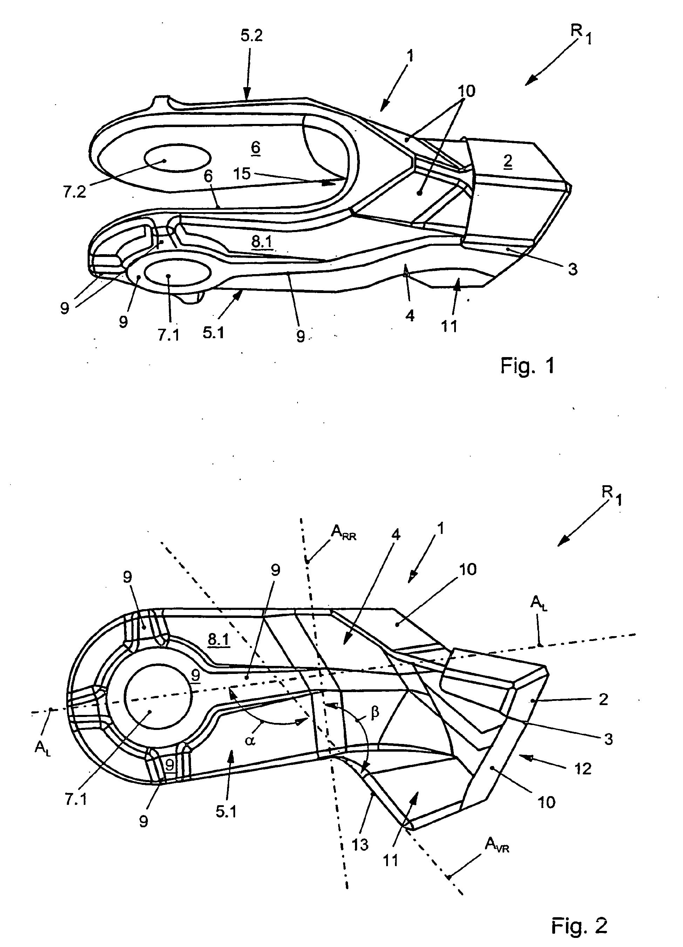

Gemäss Figur 1 weist ein erfingungsgemässer Schneidkörper R₁ einen Schneidenhalter 1 auf, der in einem vorderen Bereich zumindest eine Schneide 2 auf einem Schneidenabsatz 3 aufnimmt, die fest oder wiederlösbar mit dem Schneidenhalter 1 verbunden ist.

Der Schneidenhalter 1 besteht im wesentlichen aus einem Rumpfteil 4, von welchem zwei zueinander beabstandete ausgebildete Schenkel 5.1, 5.2 abragen, wobei deren Innenflächen 6 parallel zueinander ausgebildet sind.

In den endseitigen Bereichen der Schenkel 5.1, 5.2 weisen diese zueinander fluchtende Bohrungen 7.1, 7.2 auf.

Als vorteilhaft hat sich bei der vorliegenden Erfindung erwiesen, dass die beiden Schenkel 5.1, 5.2 ausgehend vom Rumpfteil 4 zur Bohrung 7.1, 7.2 sich in ihrer Dicke leicht verjüngen.

Auf diese Weise kann zusätzliches Gewicht und Material eingespart werden, wobei zur Kompensation der angreifenden Kräfte aussen auf einer äusseren Oberfläche 8.1, 8.2 der Schenkel 5.1, 5.2 entsprechende Verstärkungsprofile 9 vorgesehen sind, die vorzugsweise kreisringartig und/oder sternartig den Bereich der Bohrung 7.1, 7.2 im endseitigen Bereich der Schenkel 5.1, 5.2 verstärken.

Dabei sind vorzugsweise kreisringartige Verstärkungen 9 um die Bohrung 7.1 vorgesehen, wobei auch eine Verstärkung der kreisringartigen Verstärkung übergeht in den Schneidenhalter 1 bzw. das Rumpfteil 4.

Auf diese Weise ist ein Schneidkörper R₁ geschaffen, welcher gewichtsreduziert ist und gleichzeitig durch die entsprechend ausgebildeten Verstärkungsprofile 9 einen Schenkel 5.1, 5.2 schafft, welcher sehr hohen Belastungen standhält.

Im Anschluss an die Schneide 2, vorzugsweise oberhalb von dieser sind aus dem Rumpfteil 4 des Schneidenhalters spanabweisende Flächen 10 gebildet, die vorzugsweise in einem spitzen Winkel verlaufen.

Unterhalb der Schneide 2 ist ein Verstärkungsvorsprung 11 gebildet, der mehrere Funktionen besitzt.

An seiner Vorderseite 12 ist dieser ebenfalls mit spanabweisenden Flächen 10 versehen, die sich in etwa der Form der Schneide 2 anpassen.

Zudem überragt der Verstärkungsvorsprung 11, gebildet aus dem Rumpfteil 4 unten die Schenkel 5.1, 5.2 und bildet eine Verstärkung zur Kraftaufnahme der Kräfte, die im Bereich der Schneide 2 anfallen.

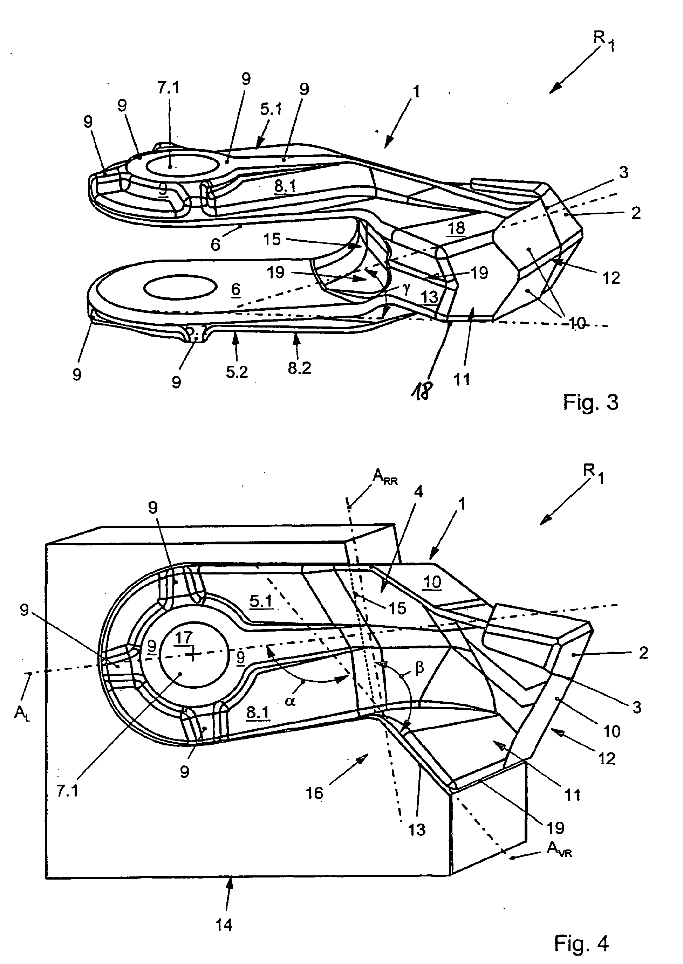

Dabei hat sich als besonders vorteilhaft erwiesen bei der vorliegenden Erfindung, eine Rückseite 13 des Verstärkungsvorsprungs 11 als Anlagefläche für ein Basisteil 14 zu verwenden, welches der Aufnahme des Schneidenkörpers R₁, wie es beispielsweise in Figur 4 dargestellt ist, dient. Dabei übergreifen die beiden Schenkel 5.1, 5.2 das Basisteil 14.

Auf diese Weise wird ein Grossteil der Schneidkräfte, die an der Schneide 2 im Betrieb anfallen, über den Verstärkungsvorsprung 11 direkt in das Basisteil 4, welches beispielsweise mit einem Rotor od. dgl. fest verbunden ist, eingeleitet.

Zwischen den beiden Schenkeln 5.1, 5.2 ist eine weitere Rückseite 15 gebildet, die auch der Anlage und Kraftübertragung auf das entsprechend ausgeformte Basisteil 14, wie es in Figur 4 angedeutet ist, dient.

Das Basisteil 14 ist plattenartig ausgebildet und weist entsprechende Flanken 16 auf, sowie eine entsprechende Bohrung 17, die beim Aufsetzen des Schneidkörpers R₁ und beim Übergreifen der beiden Schenkel 5.1, 5.2 fluchten, wobei die Rückseite 15 des Rumpfteils 4 sowie die Rückseite 13 des Verstärkungsvorsprungs 11 mit den jeweiligen Flanken 16 des Basisteils 4 bevorzugt formschlüssig zur Anlage kommen.

Die Flanken 16 des Basisteils 4 sind entsprechend der Geometrie der Rückseiten 13 und 15 von Verstärkungsprofil 11 und Rumpfteil 4 angepasst.

Dabei hat sich als besonders vorteilhaft erwiesen bei der vorliegenden Erfindung, dass zur optimalen Krafteinleitung die Rückseite 13 des Verstärkungsprofils 11 gegenüber einer Längsachse A_{L} des Schneidkörpers R₁ in einem stumpfen Winkel von etwa 90° bis 160°, bevorzugt 125° gebildet ist.

Auf diese Weise können sehr hohe Kräfte auf den Schneidkörper R₁, insbesondere über die Schneide 2 aufgenommen und über das Basisteil 14 auf den Rotor od. dgl. Aufnahme eingeleitet bzw. übertragen werden.

Dabei liegt die Rückseite 13 auf der Flanke 16 sowie die Rückseite 15 des Rumpfteils 4 ebenfalls an der Flanke 16 des Basisteils 14 bündig an.

Damit der Schneidkörper R₁ mittels Bolzen, Schrauben od. dgl. Befestigungsmittel gegenüber dem Basisteil 14 sicher positionierbar und festlegbar ist, ohne dass dieser verkippt und gleichzeitig eine möglichst grosse Anlagefläche zur Kraftübertragung gewährleistet, hat sich bei der vorliegenden Erfindung als vorteilhaft erwiesen, die Rückseite 13 des Verstärkungsvorsprungs 11 gegenüber der Rückseite 15 des Rumpfteils 4 ebenfalls in einem stumpfen Winkel auszubilden bzw. auszuformen, wobei der Winkel von etwa 125° bis 175°, vorzugsweise 150° gewählt ist.

Die Längsachse A_{L} geht in etwa mittig in Längsrichtung betrachtet durch die Schenkel 5.1, 5.2 als etwa Halbierende.

Ferner ist von Vorteil bei der vorliegenden Erfindung, wie es im Ausführungsbeispiel gemäss Figur 3 aufgezeigt ist, dass entsprechende Seitenflächen 18 des Verstärkungsvorsprungs 8, wie es in der Unteransicht dargestellt ist, ausgehend von der Vorderseite 12 zur Rückseite 13 verjüngt ausgebildet sind und bevorzugt in einem spitzen Winkel verjüngt auslaufen. Die Seitenflächen 18 des Verstärkungsvorsprunges 11 bilden einen spitzen Winkle von etwa 15° bis 35°, bevorzugt 25°.

Dabei ist von Vorteil bei der vorliegenden Erfindung, dass die Rückseiten 13 und/oder 15 des Verstärkungsprofils 11 bzw. des Rumpfteiles 4 mit einer Profilierung 19, wie es in Figur 3 angedeutet ist, versehen sind. Die Profilierungen 19 können nutartig, als winklige Nuten, V-artig, ovalartig, dreieckartige Nuten Negativ in die Rückseiten 13, 15 eingeformt sein oder als Positiv in entsprechender Form herausragen.

Entsprechend angepasst der Form der Profilierungen 19 der Rückseiten 13 und 15 sind dann die entsprechenden Stirnseiten der Flanken 16 des Basisteils ausgeformt, so dass passgenau die Rückseiten 13 und 15 von Verstärkungsprofil 11 und Rumpfteil 4 am Basisteil 14 formschlüssig anliegen und ein Kraftübergang optimiert ist. Hierzu wird gleichzeitig die Seitenstabilität während des Einsatzes des Schneidkörpers erheblich gesteigert.

Dies soll ebenfalls im Rahmen der vorliegenden Erfindung liegen.

### Bezugszeichenliste

| | | | | | |
|---|---|---|---|---|---|
| 1 | Schneidenhalter | 34 | | 67 | |
| 2 | Schneide | 35 | | 68 | |
| 3 | Schneidenabsatz | 36 | | 69 | |
| 4 | Rumpfteil | 37 | | 70 | |
| 5 | Schenkel | 38 | | 71 | |
| 6 | Innenfläche | 39 | | 72 | |
| 7 | Bohrungen | 40 | | 73 | |
| 8 | Oberfläche | 41 | 74 | 74 | |
| 9 | Verstärkungsprofil | 42 | | 75 | |
| 10 | spanabweisende Flächen | 43 | | 76 | |
| 11 | Verstärkungsvorsprung | 44 | | 77 | |
| 12 | Vorderseite | 45 | | 78 | |
| 13 | Rückseite | 46 | | 79 | |
| 14 | Basisteil | 47 | | | |
| 15 | Rückseite | 48 | | | |
| 16 | Flanke | 49 | | R₁ | Schneidkörper |
| 17 | Bohrung | 50 | | | |
| 18 | Seitenfläche | 51 | | | |
| 19 | Profilierung | 52 | | A_{L} | Längsachse |
| 20 | | 53 | | A_{VR} | Achse Verstär- |
| 21 | | 54 | | | kungsvorsprung |
| 22 | | 55 | | | Rückseite |
| 23 | | 56 | | | |
| 24 | | 57 | | A_{RR} | Achse Rumpfteil |
| 25 | | 58 | | | Rückseite |
| 26 | | 59 | | | |
| 27 | | 60 | | | |
| 28 | | 61 | | α | Winkel |
| 29 | | 62 | | β | Winkel |
| 30 | | 63 | | Y | Winkel |
| 31 | | 64 | | | |
| 32 | | 65 | | | |
| 33 | | 66 | | | |

## Patentansprüche

1. Schneidkörper zum Zerkleinern von organischen Stoffen, organischen Materialien, Böden, pflanzlichen Kulturen od. dgl., insbesondere zum Mulchen, Schreddern und Hacken, welcher mit einem Zerkleinerungsrotor fest oder wiederlösbar verbindbar ist, wobei der Schneidkörper (R₁) gegenüber einem Basisteil (14) mittels einem Befestigungsmittel verbindbar ist, wobei das Basisteil (14) eine entsprechende Flanke (16) aufweist, die mit zumindest einer der schneide (2) abgewandten Rückscite/n (13) zur Kraftübertragung in Eingriff steht, und der Schneidkörper (R₁) einen Schneidenhalter (1) bildet, von dessen Rumpfteil (4) zwei parallel verlaufende Schenkel (5.1, 5.2) mit Bohrungen (7.1, 7.2) für Verschraubungen, Bolzen etc. abragen und zwischen den beiden Schenkeln (5.1, 5.2) eine Rückseite (15) des Rumpfteils (4) gebildet ist,
**dadurch gekennzeichnet,**
**dass** das Rumpfteil (4) unterhalb der zumindest einen schneide (2) einen Verstärkungsvorsprung (11) aufweist, dessen Rückseite (13) als Anschlagfläche für das Basisteil (14) verwendbar ist, und dass die Rückseite (13) des Verstärkungsvorsprungs (11) und auch die Rückseite (15) des Rumpfteils (4) mit jeweiligen Flanken (16) des Basisteils (14) formschlüssig zur Anlage kommen.

2. Schneidkörper nach Anspruch 1, **dadurch gekennzeichnet, dass** die Rückseite (13) des Verstärkungsvorsprungs (11) in einer Achse (A_{VR}) liegt, die in einem stumpfen Winkel (α) zu einer Längsachse (A_{L}) des Schneidkörpers (1) ausgerichtet ist.

3. Schneidkörper nach Anspruch 2, **dadurch gekennzeichnet, dass** die Längsachse (A_{L}) in etwa parallel zu den jeweiligen seitlichen, länglichen Schenkeln (5.1, 5.2) als Halbierende verläuft.

4. Schneidkörper nach Anspruch 2 oder 3, **dadurch gekennzeichnet, dass** die Achse (A_{VR}) der Rückseite des Verstärkungsvorsprungs (11) zur Längsachse (A_{L}) einen Winkel (α) von etwa 90° bis 160°, vorzugsweise 125° einschliesst.

5. Schneidkörper nach wenigstens einem der Ansprüche 1 bis 4, **dadurch gekennzeichnet, dass** zwischen einer Achse (A_{RR}) der Rückseite (15) des Rumpfteils (4) und einer Achse (A_{VR}) der Rückseite (13) des Verstärkungsvorsprungs ein stumpfer Winkel (β) gebildet ist.

6. Schneidkörper nach Anspruch 5, **dadurch gekennzeichnet, dass** die Achsen (A_{RR} und A_{VR}) einen Winkel (β) von etwa 125° bis 175°, insbesondere 150° einschliessen.

7. Schneidkörper nach wenigstens einem der Ansprüche 1 bis 6, **dadurch gekennzeichnet, dass** Seitenflächen (18) des Verstärkungsvorsprungs (11) verjüngt sind und einen spitzen Winkel (Y) bilden.

8. Schneidkörper nach Anspruch 7, **dadurch gekennzeichnet, dass** die Seitenflächen (18) des Verstärkungsvorsprungs (11) einen spitzen Winkel (Y) von etwa 15° bis 35°, insbesondere 25° einschliessen.

9. Schneidkörper nach wenigstens einem der Ansprüche 1 bis 8, **dadurch gekennzeichnet, dass** im Bereich zwischen den beiden Schenkeln (5.1, 5.2) in der Rückseiten (15) im Rumpfteil (4) eine Profilierung (19) vorgesehen ist, die mit einer stirnseitigen Profilierung einer Flanke (16) des Basisteils (14) passgenau übereinstimmt.

10. Schneidkörper nach wenigstens einem der Ansprüche 1 bis 9, **dadurch gekennzeichnet, dass** der Verstärkungsvorsprung (11) in die Rückseite (15) des Schneidenhalters (1) zwischen den beiden Schenkeln (5.1, 5.2) des Rumpfteils (4) einmündet, wobei der Verstärkungsvorsprung (11) im Bereich seiner Rückseite (13) mit einer Profilierung (19) versehen ist, die entsprechend mit einer passenden Profilierung der Flanke (16) des Basisteils (14) zusammenwirkt.

11. Schneidkörper nach wenigstens einem der Ansprüche 1 bis 10, **dadurch gekennzeichnet, dass** die Rückseite (15) des Rumpfteil (4) im Bereich zwischen den beiden Schenkeln (5.1, 5.2) und die Rückseite (13) des Verstärkungsvorsprungs (11) zueinander winklig in einem stumpfen Winkel verlaufen.

12. Schneidkörper nach wenigstens einem der Ansprüche 9 bis 11, **dadurch gekennzeichnet, dass** die Profilierungen (19) der Rückseiten (15) des Rumpfteils (4) und/oder der Rückseite (13) des Verstärkungsvorspruigs (11) nutartig, querschnittlich V-artig, oval, dreieckartig als Negativ eingebrachtes oder Positiv herausstehendes Profil gebildet sind, wobei die entsprechenden Profilierungen der Stirnseiten der Flanken (16) des Basisteils (14) zur formschlüseigen Aufnahme des Schrieidkörpers (R₁) entsprechend dazu passend ausgebildet sind.

13. Schneidkörper nach wenigstens einem der Ansprüche 1 bis 12, **dadurch gekennzeichnet, dass** der Verstärkungsvorsprung (11) an seiner Vorderseite (12) spanabweisende winklige Flächen (10) aufweist und zu seiner Rückseite (13) konisch verjüngt verlaufend ausgebildet ist.

14. Schneidkörper nach wenigstens einem der Ansprüche 1 bis 13, **dadurch gekennzeichnet, dass** oberhalb der zumindest einen Schneide (2) im Rumpfteil (4) spanabweisende Flächen (10), mittig zur Schneide (2) zusammenlaufend, gebildet sind, die vorzugsweise einen spitzen Winkel bilden.

15. Schneidkörper nach wenigstens einem der Ansprüche 1 bis 14, **dadurch gekennzeichnet, dass** die an den Schneidenhalter (1), insbesondere dessen Rumpfteil (4), anschließenden Schenkel (5.1, 5.2) nach innen gerichtete parallele Oberflächen (8.1, 8.2) aufweisen, und die Schenkel (5-1, 5.2), ausgehend vcm Rumpfteil (4) zur Bohrung (7.1, 7.2) leicht verjüngt auslaufend ausgebildet sind.

16. Schneidkörper nach wenigstens einem der Ansprüche 1 bis 15, **dadurch gekennzeichnet, dass** die Schenkel (5.1, 5.2) seitliche Verstärkungsprofile (9) aufweisen.

17. Schneidkörper nach Anspruch 16, **dadurch gekennzeichnet, dass** die Verstärkungsprofile (9) in den seitlichen Schenkeln (5.1, 5.2) nahe im Bereich der Bohrung (7.1, 7.2) zur Aufnahme von Befestigungsmitteln, Schrauben, Bolzen od. dgl. vorgesehen sind.

18. Schneidkörper nach Anspruch 16 oder 17, **dadurch gekennzeichnet, dass** die Verstärkungsprofile (9) ringartig um die Bohrung (7.1, 7.2) aussen auf einer Oberfläche (8.1, 8.2) des Schneidenhalters (R₁) vorgesehen sind.

19. Schneidkörper nach wenigstens einem der Ansprüche 16 bis 18, **dadurch gekennzeichnet, dass** eines der Verstärkungprofile (9) ausgehend von der Bohrung (7.1, 7.2) bis zum Rumpfteil ausgeformt ist.

20. Schneidkörper nach wenigstens einem der Ansprüche 16 bis 19, **dadurch gekennzeichnet, dass** weitere Verstärkungsprofile (9) ausgehend von der Bohrung (7.1, 7.2) sternartig nach aussen abragen.

21. Schneidkörper nach wenigstens einem der Ansprüche 16 bis 20, **dadurch gekennzeichnet, dass** um die Bohrung (7.1, 7.2) eine ringartige Verstärkung als Verstärkungsprofil (9) gebildet ist, von welcher sternartig weitere Verstärkungsprofile (9) abragen, welche in das Rumpfteil 1 (4) einmünden.

22. Schneidkörper nach wenigstens einem der Ansprüche 1 bis 21, **dadurch gekennzeichnet, dass** das Basisteil (14) fest oder wiederlösbar mit einem Rotor oder Rotorelcment verbindbar ist.

## Claims

1. Cutting element for comminuting organic substances, organic materials, soils, plant cultures or the like, in particular for mulching, shredding and chopping, which cutting element can be connected fixedly or releasably to a comminuting rotor, it being possible for the cutting element (R₁) to be connected in relation to a base part (14) by means of a fastening means, the base part (14) having a corresponding flank (16) which is in engagement, in order to transmit force, with at least one rear side (13) facing away from the cutting edge (2), and the cutting element (R₁) forming a cutter holder (1), from the body part (4) of which protrude two limbs (5.1, 5.2) which run in parallel and have holes (7.1, 7.2) for screw connections, bolts, etc., and, between the two limbs (5.1, 5.2), a rear side (15) of the body part (4) being formed, **characterized in that** the body part (4) has a reinforcing projection (11) below the at least one cutting edge (2), the rear side (13) of which reinforcing projection is usable as a stop surface for the base part (14), and **in that** the rear side (13) of the reinforcing projection (11) and also the rear side (15) of the body part (4) come into contact with respective flanks (16) of the base part (14) in a form-fitting manner.

2. Cutting element according to Claim 1, **characterized in that** the rear side (13) of the reinforcing projection (11) lies on an axis (A_{VR}) which is oriented at an obtuse angle (α) with respect to a longitudinal axis (A_{L}) of the cutting element (1).

3. Cutting element according to Claim 2, **characterized in that** the longitudinal axis (A_{L}) runs approximately parallel to the respective lateral, elongate limbs (5.1, 5.2) as a bisecting line.

4. Cutting element according to Claim 2 or 3, **characterized in that** the axis (A_{VR}) of the rear side of the reinforcing projection (11) encloses an angle (α) of approximately 90° to 160°, preferably 125°, with respect to the longitudinal axis (A_{L}).

5. Cutting element according to at least one of Claims 1 to 4, **characterized in that** an obtuse angle (β) is formed between an axis (A_{RR}) of the rear side (15) of the body part (4) and an axis (A_{VR}) of the rear side (13) of the reinforcing projection.

6. Cutting element according to Claim 5, **characterized in that** the axes (A_{RR} and A_{VR}) enclose an angle (β) of approximately 125° to 175°, in particular 150°.

7. Cutting element according to at least one of Claims 1 to 6, **characterized in that** side surfaces (18) of the reinforcing projection (11) are tapered and form an acute angle (γ).

8. Cutting element according to Claim 7, **characterized in that** the side surfaces (18) of the reinforcing projection (11) enclose an acute angle (γ) of approximately 15° to 35°, in particular 25°.

9. Cutting element according to at least one of Claims 1 to 8, **characterized in that**, in the region between the two limbs (5.1, 5.2), a profiled portion (19) is provided in the rear side (15) of the body part (4), said profiled portion corresponding in an accurately matching manner to an end-side profiled portion of a flank (16) of the base part (14).

10. Cutting element according to at least one of Claims 1 to 9, **characterized in that** the reinforcing projection (11) leads into the rear side (15) of the cutter holder (1) between the two limbs (5.1, 5.2) of the body part (4), the reinforcing projection (11) being provided in the region of its rear side (13) with a profiled portion (19) which correspondingly interacts with a matching profiled portion of the flank (16) of the base part (14).

11. Cutting element according to at least one of Claims 1 to 10, **characterized in that** the rear side (15) of the body part (4) in the region between the two limbs (5.1, 5.2) and the rear side (13) of the reinforcing projection (11) run angled at an obtuse angle with respect to each other.

12. Cutting element according to at least one of Claims 9 to 11, **characterized in that** the profiled portions (19) of the rear sides (15) of the body part (4) and/or of the rear side (13) of the reinforcing projection (11) are formed as a profile inserted negatively or standing out positively in the manner of a groove, in a cross-sectionally V-like manner, as an oval or in a triangular-like manner, with the corresponding profiled portions of the end sides of the flanks (16) of the base part (14) being designed in a correspondingly matching manner for the form-fitting holding of the cutting element (R₁).

13. Cutting element according to at least one of Claims 1 to 12, **characterized in that** the reinforcing projection (11) has chip-deflecting, angled surfaces (10) on its front side (12) and is designed such that it runs in a conically tapered manner to its rear side (13).

14. Cutting element according to at least one of Claims 1 to 13, **characterized in that** chip-deflecting surfaces (10) are formed in the body part (4) above the at least one cutting edge (2), in a manner converging centrally to the cutting edge (2), said surfaces preferably forming an acute angle.

15. Cutting element according to at least one of Claims 1 to 14, **characterized in that** the limbs (5.1, 5.2) adjoining the cutter holder (1), in particular the body part (4) thereof, have inwardly directed parallel surfaces (8.1, 8.2), and the limbs (5.1, 5.2) are designed such that they peter out in a slightly tapered manner from the body part (4) to the hole (7.1, 7.2).

16. Cutting element according to at least one of Claims 1 to 15, **characterized in that** the limbs (5.1, 5.2) have lateral reinforcing profiles (9).

17. Cutting element according to Claim 16, **characterized in that** the reinforcing profiles (9) in the lateral limbs (5.1, 5.2) are provided in the vicinity of the hole (7.1, 7.2) for receiving fastening means, screws, bolts or the like.

18. Cutting element according to Claim 16 or 17, **characterized in that** the reinforcing profiles (9) are provided annularly around the hole (7.1, 7.2) on the outside of a surface (8.1, 8.2) of the cutter holder (R₁).

19. Cutting element according to at least one of Claims 16 to 18, **characterized in that** one of the reinforcing profiles (9) is formed from the hole (7.1, 7.2) as far as the body part.

20. Cutting element according to at least one of Claims 16 to 19, **characterized in that** further reinforcing profiles (9) protrude outward in a star-like manner from the hole (7.1, 7.2).

21. Cutting element according to at least one of Claims 16 to 20, **characterized in that** an annular reinforcement is formed as a reinforcing profile (9) around the hole (7.1, 7.2), from which annular reinforcement protrude further star-like reinforcing profiles (9) which lead into the body part (4).

22. Cutting element according to at least one of Claims 1 to 21, **characterized in that** the base part (14) can be connected fixedly or releasably to a rotor or rotor element.

## Revendications

1. Corps de coupe pour broyer des substances organiques, des matériaux organiques, des sols, des cultures végétales ou analogues, en particulier pour pailler, découper et serfouir, qui peut être connecté de façon fixe ou détachable à un rotor de broyage, cependant le corps de coupe (R₁) peut être connecté à une pièce de base (14) au moyen d'un moyen de fixation, cependant la pièce de base (14) présente un flanc (16) correspondant, qui est en prise avec au moins une face arrière (13) située à l'opposé du couteau (2) pour la transmission d'une force, et le corps de coupe (R₁) forme un support de couteau (1), à partir du tronc (4) duquel partent deux branches orientées parallèlement (5.1, 5.2) avec des alésages (7.1, 7.2) pour des vis, des boulons, etc., et une face arrière (15) du tronc (4) est formée entre les deux branches (5.1, 5.2), **caractérisé en ce que** le tronc (4) présente, en dessous dudit au moins un couteau (2), une saillie de renforcement (11) dont la face arrière (13) est utilisable comme face de butée pour la pièce de base (14), et **en ce que** la face arrière (13) de la saillie de renforcement (11) et aussi la face arrière (15) du tronc (4) viennent s'appuyer en complémentarité de forme sur des flancs (16) respectifs de la pièce de base (14).

2. Corps de coupe selon la revendication 1, **caractérisé en ce que** la face arrière (13) de la saillie de renforcement (11) se trouve dans un axe (A_{VR}), qui est orienté sous un angle obtus (α) par rapport à un axe longitudinal (A_{L}) du corps de coupe (1).

3. Corps de coupe selon la revendication 2, **caractérisé en ce que** l'axe longitudinal (A_{L}) est sensiblement parallèle aux branches allongées latérales respectives (5.1, 5.2) à mi-distance entre celles-ci.

4. Corps de coupe selon la revendication 2 ou 3, **caractérisé en ce que** l'axe (A_{VR}) de la face arrière de la saillie de renforcement (11) forme un angle (α) d'environ 90° à 160°, de préférence de 125°, avec l'axe longitudinal (A_{L}).

5. Corps de coupe selon au moins une des revendications 1 à 4, **caractérisé en ce qu'**un angle obtus (β) est formé entre un axe (A_{RR}) de la face arrière (15) du tronc (4) et un axe (A_{VR}) de la face arrière (13) de la saillie de renforcement.

6. Corps de coupe selon la revendication 5, **caractérisé en ce que** les axes (A_{RR} et A_{VR}) forment un angle (β) d'environ 125° à 175°, en particulier de 150°.

7. Corps de coupe selon au moins une des revendications 1 à 6, **caractérisé en ce que** des faces latérales (18) de la saillie de renforcement (11) sont rétrécies et forment un angle aigu (γ).

8. Corps de coupe selon la revendication 7, **caractérisé en ce que** les faces latérales (18) de la saillie de renforcement (11) forment un angle (γ) d'environ 15° à 35°, en particulier de 25°.

9. Corps de coupe selon au moins une des revendications 1 à 8, **caractérisé en ce qu'**il est prévu, dans la région comprise entre les deux branches (5.1, 5.2), dans la face arrière (15) du tronc (4), un profilage (19) qui correspond en ajustement serré à un profilage du côté frontal d'un flanc (16) de la pièce de base (14).

10. Corps de coupe selon au moins une des revendications 1 à 9, **caractérisé en ce que** la saillie de renforcement (11) débouche dans la face arrière (15) du support de couteau (1) entre les deux branches (5.1, 5.2) du tronc (4), cependant la saillie de renforcement (11) est dotée, dans la région de sa face arrière (13), d'un profilage (19) qui coopère de façon correspondante avec un profilage adapté du flanc (16) de la pièce de base (14).

11. Corps de coupe selon au moins une des revendications 1 à 10, **caractérisé en ce que** la face arrière (15) du tronc (4) dans la région comprise entre les deux branches (5.1, 5.2) et la face arrière (13) de la saillie de renforcement (11) s'étendent sous un angle obtus l'une par rapport à l'autre.

12. Corps de coupe selon au moins une des revendications 9 à 11, **caractérisé en ce que** les profilages (19) des faces arrière (15) du tronc (4) et/ou de la face arrière (13) de la saillie de renforcement (11) sont réalisés en forme de rainures, de section transversale en forme de V, ovale, triangulaire, creusées en profil négatif ou saillantes en profil positif, dans lequel les profilages correspondants des faces frontales des flancs (16) de la pièce de base (14) sont réalisées sous une forme adaptée correspondante pour le logement du corps de coupe (R₁) par emboîtement.

13. Corps de coupe selon au moins une des revendications 1 à 12, **caractérisé en ce que** la saillie de renforcement (11) présente sur sa face avant (12) des faces obliques (10) déviant les copeaux et est réalisée en forme conique se rétrécissant vers sa face arrière (13).

14. Corps de coupe selon au moins une des revendications 1 à 13, **caractérisé en ce qu'**au-dessus dudit au moins un couteau (2), il se trouve dans le tronc (4) des faces (10) déviant les copeaux, au milieu du couteau (2), qui forment de préférence un angle aigu.

15. Corps de coupe selon au moins une des revendications 1 à 14, **caractérisé en ce que** les branches (5.1, 5.2) se raccordant au support de couteau (1), en particulier à son tronc (4), présentent des surfaces parallèles (8.1, 8.2) orientées vers l'intérieur, et les branches (5.1, 5.2) sont réalisées sous une forme se rétrécissant légèrement à partir du tronc (4) vers l'alésage (7.1, 7.2).

16. Corps de coupe selon au moins une des revendications 1 à 15, **caractérisé en ce que** les branches (5.1, 5.2) présentent des profils de renforcement latéraux (9).

17. Corps de coupe selon la revendication 16, **caractérisé en ce que** les profils de renforcement (9) sont prévus dans les branches latérales (5.1, 5.2) à proximité de la région de l'alésage (7.1, 7.2) pour recevoir des moyens de fixation, des vis, de boulons ou analogues.

18. Corps de coupe selon la revendication 16 ou 17, **caractérisé en ce que** les profils de renforcement (9) sont prévus en forme d'anneaux autour de l'alésage (7.1, 7.2) extérieurement sur une surface (8.1, 8.2) du support de couteau (R₁).

19. Corps de coupe selon au moins une des revendications 16 à 18, **caractérisé en ce qu'**un des profils de renforcement (9) est façonné à partir de l'alésage (7.1, 7.2) jusqu'au tronc.

20. Corps de coupe selon au moins une des revendications 16 à 19, **caractérisé en ce qu'**autres profils de renforcement (9) partent vers l'extérieur en forme d'étoile à partir de l'alésage (7.1, 7.2).

21. Corps de coupe selon au moins une des revendications 16 à 20, **caractérisé en ce qu'**un renforcement annulaire en forme de profil de renforcement (9) est formé autour de l'alésage (7.1, 7.2), à partir duquel partent d'autres profils de renforcement (9) en forme d'étoile, qui se terminent dans le tronc (4).

22. Corps de coupe selon au moins une des revendications 1 à 21, **caractérisé en ce que** la pièce de base (14) peut être assemblée de façon fixe ou détachable à un rotor ou à un élément de rotor.
